Europäisches Patentamt

European Patent Office

Office européen des brevets

(11) Veröffentlichungsnummer: **0 038 461**
**B1**

(12) **EUROPÄISCHE PATENTSCHRIFT**

(45) Veröffentlichungstag der Patentschrift: **28.11.84**

(21) Anmeldenummer: **81102576.6**

(22) Anmeldetag: **06.04.81**

(51) Int. Cl.³: **B 65 G 15/54,** B 65 G 17/08,
F 16 G 1/18, B 21 F 43/00

(54) **Drahtgeflechtförderband und Verfahren zur Herstellung dieses Drahtgeflechtförderbandes.**

(30) Priorität: **21.04.80 DE 3015228**
**10.11.80 DE 3042346**

(43) Veröffentlichungstag der Anmeldung:
**28.10.81 Patentblatt 81/43**

(45) Bekanntmachung des Hinweises auf die
Patenterteilung:
**28.11.84 Patentblatt 84/48**

(84) Benannte Vertragsstaaten:
**AT BE CH FR GB IT LI NL SE**

(56) Entgegenhaltungen:
**DE-A-1 602 634**
**DE-B-1 231 160**
**DE-C- 526 523 ·**
**DE-U-7 017 535**
**DE-U-7 017 536**
**DE-U-7 231 050**
**DE-U-7 236 077**

(73) Patentinhaber: **Draadindustrie Jonge Poerink**
**B.V.**
**Prins Bernhardlaan 25**
**Borne (NL)**

(72) Erfinder: **Poerink, Nicolaas Jonge**
**Prins Bernhardlaan 25**
**Borne (NL)**

(74) Vertreter: **Schulze Horn, Stefan, Dipl.-Ing. et al**
**Patentanwälte Dipl.-Ing. S. Schulze Horn M.SC.**
**Dr. H. Hoffmeister Goldstrasse 36**
**D-4400 Münster (DE)**

Courier Press, Leamington Spa, England.

## Beschreibung

Die Erfindung betrifft ein Drahtgeflechtförderband aus mäanderförmig gebogenen, zur Bandlaufrichtung quer verlaufenden einstückigen Gliedern aus nebeneinander angeordneten Längsstegen und in Reihen angeordneten Querstegen, wobei die zueinander gekehrten Enden der Glieder auf quer zur Bandlaufrichtung verlaufende Querstäbe aufgezogen sind und die Längsstege zueinander unter einem geringen Winkel verlaufen und dadurch die Länge der Querstege geringer als der mittlere Abstand der Längsstege voneinander ist.

Drahtgeflechtförderbänder, wie sie von der Anmelderin gefertigt werden, sind bereits seit langem bekannt. Zwischen einzelnen Ösen sind dabei auf den Querstäben Schraubenfedern angeordnet, die bei der Montage der Ösen auf den Querstäben zusammengedrückt werdens DE—B—1 231 160. Dadurch ist es möglich, den beim Betrieb des Bandes auftretenden Verschleiß aufzufangen und die Anlage der Endglieder an den Führungen bzw. den Enden der Querstäbe zu gewährleisten. Diese Bänder laufen daher praktisch ohne Beeinträchtigung durch Verschleiß und in definierten Bahnen, das heißt sie können hohen Belastungen ausgesetzt werden.

Nachteilig bei den vorstehend beschriebenen Bändern ist allerdings, daß ihre Fertigung aufwendig ist, da sowohl die einzelnen Ösen als auch die einzelnen Schraubenfedern manuell auf die Querstäbe aufgestreckt werden müssen. Diese Bänder sind also verhältnismäßig kostspielig.

Es ist weiterhin ein Drahtgeflechtförderband bekannt (DE—U 7 236 077), bei welchem zum Transport von Backwaren durch einen mit Hochfrequenz arbeitenden Backofen ein Band benutzt wird, welches einstückig Glieder mit parallel verlaufenden Längsstegen und in Reihen verlaufenden Querstegen Aufweist. Zur Halterung der Querstäbe sind dabei die Enden der Längsstege die Querstäbe teilweise umschlingend ausgebildet. Dieses bekannte Gliederförderband weist aber den Nachteil auf, daß zum Ineinanderstecken der Glieder nebeneinander liegende Querstege eine verschiedene Länge aufweisen müssen. Dies bedeutet im einzelnen, daß die Querstege einer Reihe, z.B. der in Bandlaufrichtung vorderen länger sein müssen, als die der in Bandlaufrichtung hinteren Reihe. Nur dadurch ist es möglich, die Glieder ineinander zu stecken.

Nachteilig ist bei einem solchen Band, daß eine Biegemaschine, die jeweils nacheinander Stege der vorderen und hinteren Reihe beigt, bei diesem Vorgang Stege unterschiedlicher Länge biegen muß. Eine solche Biegemaschine ist, sofern sie überhaupt verwirklicht werden kann, nur mit hohem Aufwand zu erstellen, sie wird aufgrund ihrer Kompliziertheit störanfällig sein und nur eine geringe Produktionsleistung aufweisen können. Es kann daher davon ausgegangen werden, daß ein solches Band nicht realisierbar ist. Der genannte Stand der Technik kann als rein theoretisch bezeichnet, werden. Insbesondere ist ein Verschleißausgleich bei einem solchen Band nicht möglich, wobei außerdem noch eine definierte Führung innerhalb der Führungen nur schwer oder gar nicht erreichbar sein dürfte.

Aus der DE—U—7 231 050 ist weiterhin das eingangs genannte Band bekannt, bei welchem aber der Nachteil auftritt, daß Verschleiß nicht aufgefangen werden kann, und daß die einzelnen Glieder sich gegeneinander ein wenig verschieben können, so daß dadurch nicht nur der Verschleiß erhöht wird, sondern auch eine beträchtliche Geräuschentwicklung besteht. Weiterhin ist auch eine Verschiebung der Glieder gegenüber der Querstäben möglich, so daß eine seitliche Führung erheblichen Beanspruchungen ausgesetzt ist.

Es ist jetzt Aufgabe der Erfindung, ein Förderband der eingangs genannten Art zu schaffen, welchem die vorstehend genannte Nachteile nicht mehr anhaften und welches insbesondere besonders wirtschaftlich herstellbar sein soll, wobei aber der Ausgleich des im Betrieb auftretenden Verschleißes sicher gewährleistet sein soll, sowie bei dem die definierte Führung der Glieder vorhanden sein soll.

Insbesondere soll die Fertigung der Glieder des Förderbandes auf einer Biegemaschine mit einfachem und störungsanfälligem Aufbau möglich sein, wobei eine hohe Produktionsgeschwindigkeit auch bei Verwendung von hochwertigen Drahtmaterialien möglich sein soll. Dass erfindungsgemäße Band soll darüber hinaus geräuscharm, störungsfrei und unter Einsatz von nur geringen Antriebsleistungen laufen.

Diese Aufgabe wird erfindungsgemäß dadurch gelöst, daß die Glieder in Längsrichtung der Querstäbe vorgespannt sind.

Vorteilhaft zur Erleichterung der Montage des Bandes bei gleichzeitiger Sicherstellung des Ausgleichs des auftretenden Verschleißes im Betrieb kann der Unterschied zwischen der Länge der Querstege und dem mittleren Abstand der Längsstege voneinander zwischen 0,1 und 0,5, vorzugsweise aber 0,2 mm betragen. Vorteilhafterweise sind die Querstege aus einem die Längsstege verbindenden Bogen gebildet und weisen keinen geradlinigen Abschnitt auf. Diese Form der Glieder des Drahtgeflechtes ist billiger in der Herstellung, da jeweils ein Biegevorgang an jedem Quersteg entfällt.

Gemäß einer bevorzugten Ausführungsform der Erfindung kann vorgeseheh sein, daß der Umschlingungswinkel der Enden der Längsstege an den Querstäben mehr als 180°, vorzugsweise 270° beträgt.

Erfindungsgemäß werden die Drahtgeflechtförderbänder vorteilhaft so hergestellt, daß die Glieder entspannt auf die Querstäbe aufgeschoben und danach zur Erzielung der Vorspannung um einen Weg zusammengeschoben werden, der dem Produkt aus der Anzahl der Querstege einer Reihe und dem Längenunterschied zwischen dem mittleren Abstand der Längsstege und der Länge der Querstege entspricht.

Ersichtlicherweise ist die Herstellung des erfindungsgemäßen Drahtgeflechtförderbandes außerordentlich einfach, da neben der automatisch erfolgenden Herstellung des endlos geformten Mäanderstreifens und dem automatischen auf Länge schneiden desselben zu den Gliedern an manueller Arbeit nur das Aufstecken der Glieder auf die Querstäbe und die Einstellung der Vorspannung anfällt. Da die Querstege immer die gleiche Länge haben, ist auch die Herstellung der entsprechenden Biegemaschine besonders einfach, diese kann einfach aufgebaut sein und störungsunanfällig mit hohen Produktionsraten arbeiten, so daß von einer idealen Lösung der anstehenden Probleme gesprochen werden kann. Dabei ist insbesondere zu berücksichtigen, daß aufgrund der Vorspannung etwaiger Verschleiß ausgeglichen wird und die jeweiligen Glieder also nicht hin und her "schlackern" können. Die Glieder verlaufen also immer auf definierten Bahnen innerhalb der Führungen, wobei die Bearbeitung durch spezielles Fachpersonal nicht erforderlich ist. Diese Vorteile ergeben sich insbesondere deshalb, da die Enden der Längsstege von den Querstegen beim Aufbringen der Vorspannung zusammengeschoben werden und die Längsstege daher eine gewisse Biegespannung erhalten, so daß sie beim Auftreten von Verschleiß im Bestreben zum Rückgang auf ihre ursprüngliche Lage diesen ausgleichen.

Im folgenden werden Ausführungsbeispiele der Erfindung anhand von Zeichnungen näher beschrieben. Es zeigen:

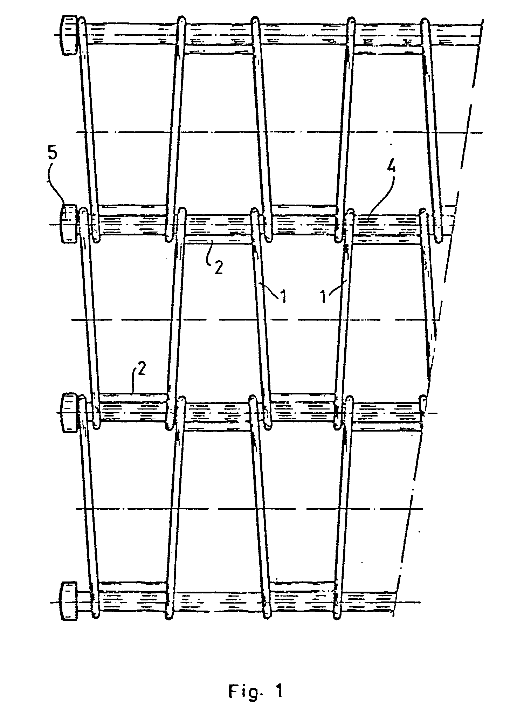

Figur 1 eine Draufsicht auf einen Ausschnitt einer ersten Ausführungsform eines Drahtgeflechtförderbandes,

Figur 2 einen Ausschnitt aus einem mäanderförmigen Glied von unten gesehen,

Figure 3 einen Querschnitt durch eines der mäanderförmigen Glieder,

Figure 4 eine abgewandelte Ausführungsform eines Gliedes in perspektivischer Darstellung und

Figur 5 einen Schnitt gemäß der Linie V—V von Figur 4.

Gemäß den Figuren weist das erfindungsgemäße Drahtgeflechtförderband nebeneinanderliegende, mäanderförmige Streifen aus miteinander einstückigen Längs- und Querstegen 1 und 2 auf, deren zueinandergekehrte Enden mit quer zur Bandlaufrichtung verlaufenden Querstäben 4 miteinander verbunden sind. Die Enden der Querstäbe weisen Flansche 5, Scheiben oder andere geeignete Glieder auf, um die Glieder zu halten und verlaufen in an sich bekannter Weise in Führungen. Diese Führungen ebenso wie Antriebsräder für die Bänder sind bekannt und brauchen daher nicht näher beschrieben zu werden.

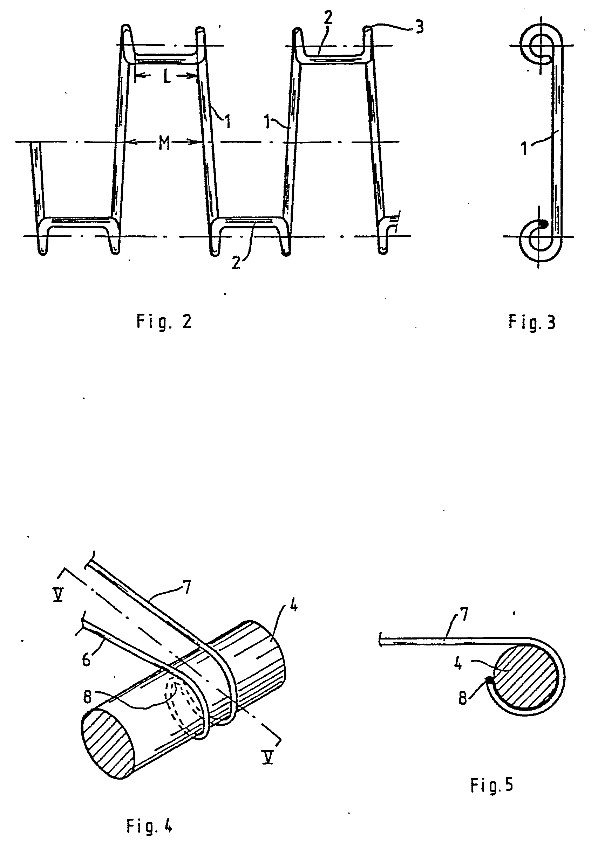

Die einzelnen Glieder des Bandes besitzen eine Form, in welcher die Längsstege 1 unter einem geringen Winkel zueinander verlaufen und umschlingen unter Bildung von Ösen mit ihren Enden die Querstäbe 4 um mehr als 180°, vorzugsweise aber ca. 270°. Zwischen den Enden der Längsstege verlaufen die Querstege 2 mit einer Länge gemäß Figur 2 von L, die gemessen wird zwischen den jeweils inneren Kanten der Längsstege 1. Da die Längsstege 1 unter einem gewissen Winkel verlaufen, d.h. sie laufen jeweils zu dem sie verbindenden Quersteg 2 hin zusammen und bilden auf der dem Quersteg gegenüberliegenden Seite eine Öffnung zum Einschieben der Querstegs-Seite des danebenliegenden Gliedes, weisen sie einen mittleren Abstand M auf, der größer ist, als die Länge L der Querstege 2.

Erfindungsgemäß beträgt die genannte Überlänge zwischen 0,1 und 0,5, vorzugsweise aber 0,2 mm. Die zum Einschieben der danebenliegenden Gliederenden erzeugten Öffnungen sind dabei um das Doppelte größer, als die Differenz zwischen dem mittleren Abstand M und der Längs L der Querstege.

In den Figuren 4 und 5 ist eine abgewandelte Form der Glieder des Förderbandes gezeigt, bei der der Abstand zwischen Längsstegen 6 und 7 geringer ist, da diese durch Querstege 8 verbunden werden, die aus der Biegung zwischen den Längsstegen 6 und 7 erzeugt sind und keinen geradlinigen Abschnitt aufweisen. Auch bei dieser Ausführungsform umschlingen die Enden der Längsstege 6 und 7 die Querstäbe 4 um mehr als 180°, vorzugsweise ca. 270°.

Die Herstellung der erfindungsgemäßen Bänder erfolgt jetzt derart, daß nach Biegen des über eine Haspe zugeführten Drahtes in der Biegemaschine die erzeugten, mäanderförmigen Streifen auf Länge geschnitten werden und dann auf die Querstäbe aufgeschoben werden. Nach Zusammendrücken der Glieder und dadurch Aufbringung der Vorspannung werden die freien Enden der Querstäbe mit Anschlägen versehen, um das Auseinandergehen der Glieder zu verhindern und das Band kann dann ohne weiteren Aufwand verwendet werden, wobei die vorstehend genannten Vorteile erzielt werden und auch bei längerem Betrieb erhalten bleiben. Insbesondere ist trotz des einfachen Aufbaus und der einfachen Montage gewährleistet, daß der Verschleiß ausgeglichen wird und damit der genannte geräuscharme Betrieb, die Störungsfreiheit des Betriebes, die geringe Antriebsleistung und die geringe Störanfälligkeit vorhanden sind.

**Patentansprüche**

1. Drahtgeflechtförderband aus mäanderförmig gebogenen, zur Bandlaufrichtung quer verlaufenden einstückigen Gliedern aus nebeneinander angeordneten Längsstegen (1, 6 u. 7) un in Reihen angeordneten Querstegen (2, 8), wobei die zueinander gekehrten Enden der Glieder auf quer zur Bandlaufrichtung verlaufende Querstäbe (4) aufgezogen sind und die Längsstege (1, 6 u. 7) zueinander unter einem geringen Winkel verlaufen und dadurch die länge der Querstege (2, 8) geringer als der mittlere Abstand der längsstege (1, 6 u. 7) voneinander ist, dadurch gekennzeichnet, daß die Glieder in Längsrichtung der Querstäbe (4) vorgespannt sind.

2. Drahtgeflechtförderband nach Anspruch 1, dadurch gekennzeichnet, daß der Unterschied zwischen der Länge (L) der Querstege (2) und dem mittleren Abstand (M) der Längsstege (1) zwischen 0,1 und 0,5, vorzugsweise 0,2 mm beträgt.

3. Drahtgeflechtförderband nach Anspruch 1, dadurch gekennzeichnet, daß die Querstege (8) aus einem die Längsstege (6, 7) verbindenden Bogen gebildet sind und keinen geradlinigen Abschnitt aufweisen.

4. Drahtgeflechtförderband nach den Ansprüchen 1 bis 3, dadurch gekennzeichnet, daß der Umschlingungswinkel der Enden der Längsstege (1, 6, 7) an den Querstäben (4) meht als 180°, vorzugsweise mehr als 270° beträgt.

5. Verfahren zur Herstellung des Drahtgeflechtförderbandes nach den Ansprüchen 1 bis 4, dadurch gekennzeichnet, daß die Glieder entspannt auf die Querstäbe aufgeschoben und danach zur Erzielung der Vorspannung um einen Weg zusammengeschoben werden, der dem Produkt aus der Anzahl der Querstege einer Reihe und dem Längenunterschied (M) zwischen dem mittleren Abstand der Längsstege und der Länge der Querstege entspricht.

**Revendications**

1. Bande transporteuse en fil façonné et imbriqué, faite d'éléments monolithiques pliés en méandre, dirigés transversalement à la direction du mouvement de la bande et faits de parties longitudinales (1, 6 et 7) agencées côte-à-côte et de parties transversales (2, 8) disposées en rangées, les extrémités — tournées l'une vers l'autre — de ces éléments étant passées sur des broches transversales dirigées transversalement à la direction du mouvement de la bande, et les parties longitudinales (1, 6 et 7) formant entre elles un petit angle, de manière que la longueur des parties transversales (2, 8) soit moindre que l'intervalle moyen entre parties longitudinales (1, 6 et 7), caractérisée en ce que les éléments sont précontraints dans la direction longitudinale des broches transversales (4).

2. Bande transporteuse selon la revendication 1, caractérisée en ce que la différence entre la longueur (L) des parties transversales (2) et l'intervalle moyen (M) entre parties longitudinales (1) vaut de 0,1 à 0,5, de préférence 0,2 mm.

3. Bande transporteuse selon la revendication 1, caractérisée en ce que les parties transversales (8) sont formées à partir d'un coude reliant les parties longitudinales (6, 7) et ne présentent aucune portion rectiligne.

4. Bande transporteuse selon les revendications 1 à 3, caractérisée en ce que l'étendue angulaire de l'emprise des extrémités des parties longitudinales (1, 6, 7) sur les broches transversales (4) est de plus de 180°, de préférence de plus de 270°.

5. Procédé de fabrication de la bande transporteuse selon les revendications 1 à 4, caractérisé en ce que l'on place les éléments sur les broches transversales alors qu'ils ne sont pas contraints, après quoi, pour obtenir la précontrainte, on les comprime d'une course de compression totale égale au produit du nombre des parties transversales d'une rangée par la différence entre la longueur de l'intervalle moyen (M) des parties longitudinales et la longueur des parties transversales.

**Claims**

1. A wire netting conveyor belt comprising integral links bent in a meander-shaped configuration, extending transversely of the direction of travel of the belt and including side-by-side positioned longitudinal legs (1, 6 and 7) and serially positioned cross legs (2, 8) with the facing ends of the links being fitted around cross rods (4) extending transversely of the direction of belt travel, and the longitudinal legs (1, 6 and 7) extending under a small angle relative to each other, whereby the length of the cross legs (2, 8) is smaller than the average spacing between the longitudinal legs (1, 6 and 7), characterized in that the links are biased in the longitudinal direction of the cross rods (4).

2. The wire netting conveyor belt according to claim 1, characterized in that the difference between the length (L) of the cross legs (2) and the average spacing (M) of the longitudinal legs (1) is between 0.1 and 0.5 mm, preferably 0.2 mm.

3. The wire netting conveyor belt according to claim 1, characterized in that the cross legs (8) are formed of an elbow interconnecting the longitudinal legs (6, 7), said cross legs not having a linear portion.

4. The wire netting conveyor belt according to claim 1 to 3, characterized in that the looping angle of the longitudinal legs (1, 6, 7) on the cross rods (4) is greater than 180°, preferably greater than 270°.

5. A method of manufacturing the wire netting conveyor belt according to claims 1 to 4, characterized in that the links are fitted onto the cross rods in a relaxed state and thereafter to obtain the bias effect, urged against each other by a distance corresponding to the product of the number cross legs of one row and the difference in length (M) between the average spacing of the longitudinal legs and the length of the cross legs.

Fig. 1

Fig. 2

Fig. 3

Fig. 4

Fig. 5